# FASCICULE DE BREVET EUROPEEN

(11) **EP 0 895 329 B1**
(45) Date de publication et mention de la délivrance du brevet: **30.07.2003**
(21) Numéro de dépôt: 97401784.0
(22) Date de dépôt: 31.07.1997
(51) Int. Cl.: H02G 3/38, E04F 15/024

(54) **Dalle technique à éléments fonctionnels amovibles pour surfaces de faux planchers**
Technische Platte mit entfernbaren Funktionselementen für Doppelbödenflächen
Technical tile with removable functional elements for the surface of false floors

(43) Date de publication de la demande: 03.02.1999
(73) Titulaire: Juy SA, 60800 Crepy en Valois (FR)
(72) Inventeur: Petit, Yves, 78110 Le Vesinet (FR); Georget, Yves, 92360 Meudon La Forêt (FR)
(74) Mandataire: Jacquelin, Marc-Henri

(56) Documents cités:
- EP-A- 0 621 451
- DE-A- 3 114 225
- DE-U- 7 008 687
- FR-A- 2 747 713

## Description

La présente invention concerne la fabrication d'une dalle constituée d'éléments de base et d'accessoires, destinée à compléter des surfaces de faux planchers techniques.

Une telle dalle est connue du document EP-A-621 451.

Cette dalle comporte des petits éléments fonctionnels aisément amovibles permettant principalement de faciliter la traversée de la surface définie par le niveau du faux plancher par les câbles, tuyaux ou autres, passant sous le faux plancher, et de cadres-supports démontables.

La dalle faisant l'objet de l'invention est conçue pour être utilisée dans tous les locaux équipés d'un faux plancher, étant adaptable à tous les modèles des dalles actuelles de faux planchers.

La dalle présente les avantages techniques, économiques et écologiques décrits ci-après.

Depuis l'origine des planchers techniques surélevés dits "faux planchers", le problème de la facilité de réglage de la planimétrie de l'ensemble de la surface et de la traversée des éléments constituant ces dalles de faux planchers pour le passage de câbles, tuyaux ou autres n'a jamais été résolu d'une manière satisfaisante, ni techniquement ni économiquement. Chaque dalle repose sur quatre vérins qui doivent être réglés avec une grande précision alors qu'un plan se définit par son passage par trois points.

Techniquement, la solution connue consiste à découper des dalles pleines à la demande, soit en partie centrale, soit sur un bord.

Ceci présente les inconvénients suivants :

Travail à la scie sauteuse devant se faire en dehors des locaux sensibles (sciures et poussières métalliques), généralement effectué par un menuisier extérieur à l'entreprise, qui doit se déplacer au coup par coup et qui n'est pas souvent libre immédiatement.

Ces découpes affaiblissent la résistance des dalles qui sont conçues comme un ensemble autonome, d'où l'impossibilité de faire des trous de grandes dimensions.

Impossibilité technique de découper les angles ou la proximité des angles des dalles à cause de l'espace nécessité par la pose sur les vérins de support.

Economiquement, le fait de déplacer un professionnel et son outillage pour effectuer ce travail de découpe représente un coût élevé. Sur place, on trouve rarement une personne habilitée et/ou qui consente à utiliser l'outillage nécessaire, pour autant qu'il existe à cause du risque de blessure.

Généralement, une dalle percée est mise au rebut lorsqu'on ne l'utilise plus, ce qui est fréquent, notamment en salles d'ordinateurs où les machines changent fréquemment de type et d'implantation.

Comme on répugne à les jeter, car elles représentent un coût à l'achat neuves, on les stocke quelque part, d'où une immobilisation de surface, dans l'espoir de s'en resservir un jour, d'où un temps perdu à rechercher une dalle déjà découpée pouvant être réutilisée. Comme cette occurrence est très rare, on découpe une nouvelle dalle entière qui ira bientôt grossir le lot des autres. Enfin, on fait généralement enlever le tout par une entreprise de débarras, ce qui est coûteux.

En effet, de vieilles dalles de faux plancher découpées ne peuvent à peu près servir à rien. Elles ne peuvent pas être réemployées parce qu'elle sont dangereuses (trous, porte à faux), ne peuvent ni ne doivent brûler utilement du fait de leur composition mixte aggloméré de bois/colle/plastique/métal, dégageant des fumées toxiques et chimiquement agressives (chlore).

A une moindre échelle, c'est donc également un problème d'écologie, puisque rien n'est facilement recyclable dans une vieille dalle de faux plancher.

Pour résoudre ces problèmes, l'invention se définit comme une dalle technique à éléments fonctionnels amovibles pour surfaces de faux plancher, destinée à s'intégrer en tant que partie constituante d'un ensemble autoéquilibré et rigide, caractérisée en ce qu'elle est constituée d'un cadre de dimensions réglables et qui comporte d'une part des éléments profilés métalliques de longueur appropriée s'emboîtant dans des pièces d'angle par l'intermédiaire d'éclisses coulissantes, la longueur additionnée des éléments et des pièces d'angle correspondant à la plus petite dimension horizontale des dalles environnantes du faux plancher, et d'autre part au moins une traverse métallique destinée à délimiter des espaces à l'intérieur dudit cadre, dont la hauteur correspond également à la plus faible épaisseur des dalles environnantes du faux plancher.

A quelques millimètres en plus ou en moins, pour un même module, les dalles de faux plancher pourront avoir toutes les mêmes dimensions, tant en surface qu'en épaisseur.

L'âme des dalles pourra être généralement constituée d'une planche en aggloméré de bois à haute densité, collée sur un fond métallique. Selon les types de dalles, ce fond métallique peut former un bac, ce qui assure la rigidité des bords et une meilleure conductibilité électrique.

La face supérieure destinée à la circulation sera généralement composée d'un lamifié haute résistance, collé également, mais peut être de nature différente suivant l'exploitation des lieux et/ou l'effet décoratif recherché (caoutchouc, moquette, etc.), dans la mesure où elle n'est pas incompatible avec l'utilisation (génération de poussière, formation/non écoulement de l'électricité statique, entre autres).

En bordure supérieure, les dalles pourront généralement recevoir un jonc serti en néoprène dur destiné à assurer un joint parfait tout en présentant un aspect décoratif.

De profil, les bords des dalles seront avantageusement légèrement trapézoïdaux, de façon à pouvoir être placées et enlevées facilement, et à venir se caler sur les tétons des têtes de vérins.

Certains modèles de dalles peuvent être en aluminium et d'autres en acier façonné, ou autres matières, et présenter des caractéristiques de résistance au poinçonnement, au fléchissement et à l'écoulement des charges électrostatiques, etc. adaptées à l'usage.

Les charges électrostatiques sont de préférence évacuées par l'intermédiaire des vérins métalliques de support, lesquels sont reliés entre eux par un maillage de câbles raccordés à la ligne d'équipotentialité des masses d'utilisation.

Il faut noter que la description ci-dessus est celle des dalles de faux plancher de salles d'ordinateurs qui représentent les plus fortes contraintes eu égard au poids, aux charges électostatiques, et à la précision du réglage des vérins.

Les faux planchers type "bureau" pourront être d'une structure plus légère, posées sur des vérins, souvent en plastique, réglables ou non, car ils n'ont pas les mêmes besoins techniques. Ils pourront être généralement recouverts d'une moquette amovible.

Des modes d'exécution de l'invention vont maintenant être décrits à titre d'exemples nullement limitatifs, avec référence aux figures du dessin annexé dans lequel :

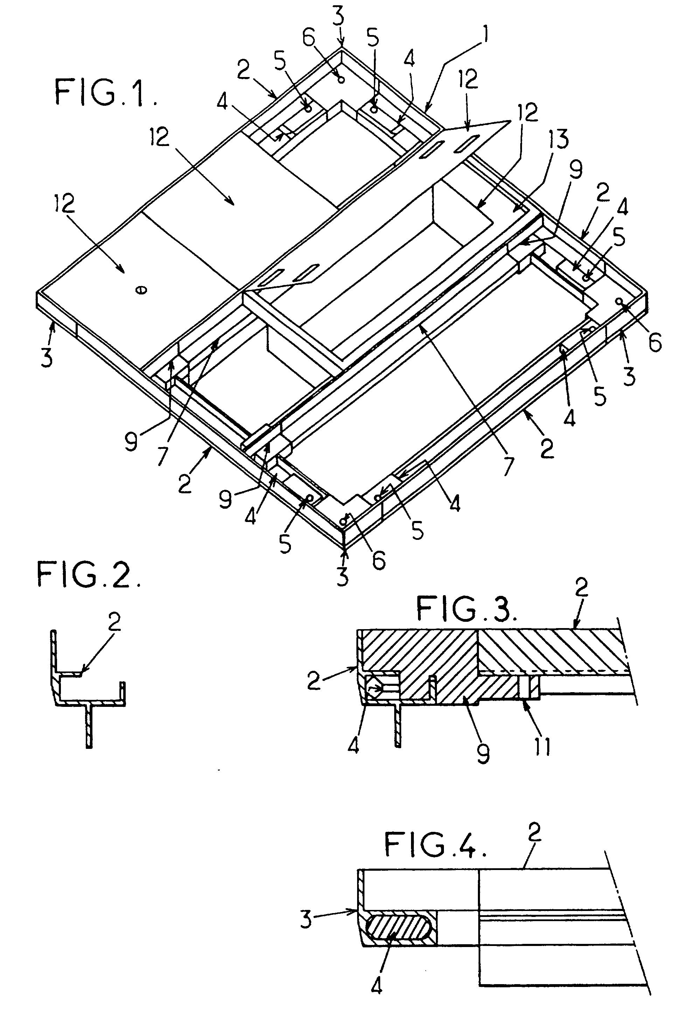

- la figure 1 est une vue d'ensemble du système en perspective ;

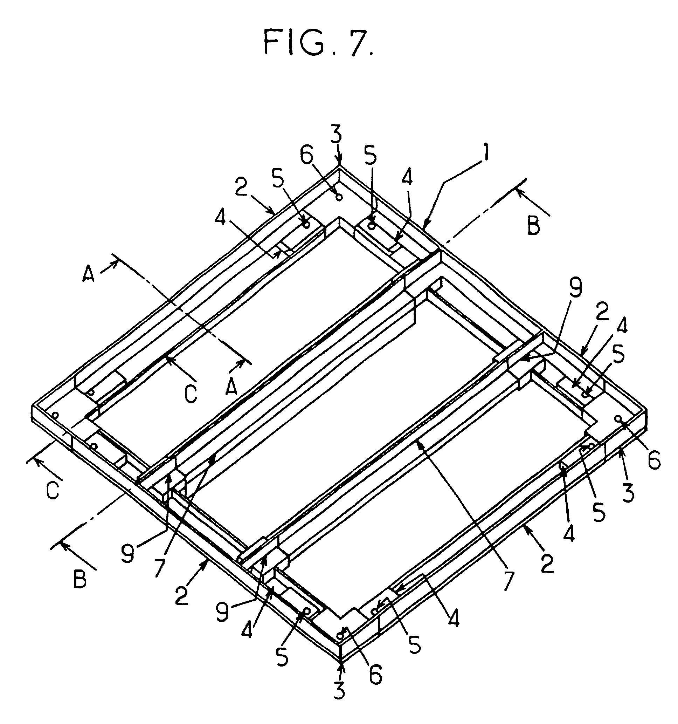

- la figure 2 est une vue en coupe transversale d'un élément profilé métallique, selon la ligne A-A de la figure 7 ;
- la figure 3 est une vue partielle en coupe selon la ligne B-B de la figure 7 ;
- la figure 4 est une vue partielle en coupe selon la ligne C-C de la figure 7 ;

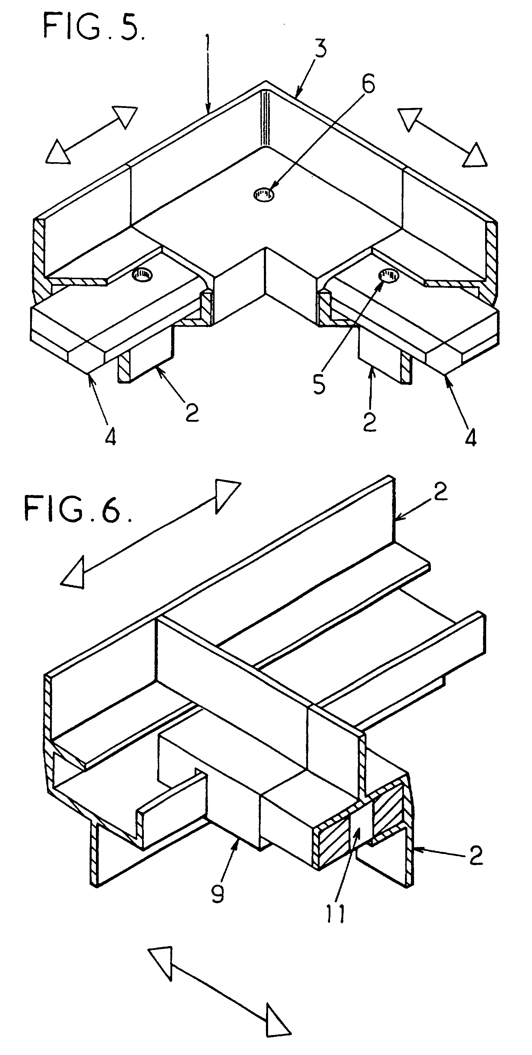

- la figure 5 est une vue partielle en perspective montrant un angle de cadre ;
- la figure 6 est une vue partielle en perspective montrant une tête de traverse ;
- la figure 7 est une vue en perspective de l'ensemble du cadre ;
- la figure 8 représente en perspective une variante de cadre pour une dalle technique conforme à l'invention ; et
- la figure 9 est une vue en perspective partielle montrant le détail des moyens de réglage en hauteur.

Une dalle conforme à l'invention comporte un cadre 1 constitué d'éléments 2 en profilés métalliques de longueurs appropriées, dont la géométrie pourra correspondre soit à celle des autres dalles pleines, soit à celle d'une dalle coupée dans sa diagonale. Le terme générique de profilé métallique ne préjuge en rien de la façon dont il est obtenu, par laminage, assemblage, extrusion, usinage, fonderie, etc. La dalle comporte d'autre part des pièces d'angle 3 dans lesquelles viendront s'emboîter les éléments métalliques par l'intermédiaire d'éclisses coulissantes 4 avec dispositif de blocage 5 (boulon, vis ou rivet). Un second dispositif 6 situé dans la pièce d'angle permettra d'effectuer un réglage fin de la hauteur du cadre, pour le placer rigoureusement de niveau avec les dalles de faux plancher environnantes. Par exemple, ce dispositif pourra être constitué d'une vis placée à l'intérieur d'un taraudage réalisé dans la pièce 3 ou d'un insert, cette vis venant prendre appui sur la tête de vérin supportant le faux plancher voisin.

La longueur additionnée des éléments 2 et des pièces d'angle 3 correspondra à la plus petite dimension horizontale de dalle connue, du fait du rattrapage par glissement sur les éclisses.

A ce même titre, la hauteur du profilé cadre et traverses de la dalle correspondra également à la plus faible épaisseur de dalle de faux plancher, le rattrapage de hauteur se faisant par le dispositif de réglage 6 à chaque angle du cadre reposant sur les vérins de support du faux plancher.

Il faut préciser que la dalle de l'invention est conçue pour s'intégrer comme une partie constituante d'un ensemble autoéquilibré et rigide, à savoir le faux plancher dans lequel elle vient se placer, et qui lui assurera le calage et le maintien de géométrie nécessaires.

Ces principes permettent d'adapter cette dalle à toutes formes géométriques, y compris triangulaires, et dimensions des dalles de faux plancher employées par les utilisateurs.

Une ou des traverses métalliques 7 sont destinées à délimiter des espaces à l'intérieur du cadre. Ces traverses seront constituées de longueurs de profilé métallique qui pourra être identique ou non à celui du cadre 2 destiné à supporter les éléments fonctionnels de remplissage 12.

A chaque extrémité, une tête 9 peut coulisser dans le profilé métallique 7, qui vient reposer sur le profilé du cadre 1.

Un dispositif de blocage 11 permet de régler la longueur hors tout de la traverse 7 et de la tête 9 en fonction de la dimension du cadre 1.

Le dispositif de blocage 11 est constitué d'une vis placée à l'intérieur d'un taraudage réalisé dans la pièce 9, ou d'un rivet ou boulon venant solidariser la pièce 9 avec la pièce 2 par trou débouchant ou par blocage en appui sur la pièce 2, ou encore par boulonnage direct sur l'aile du profilé du cadre 1.

La forme des têtes des traverses permet de manipuler celles-ci par le dessus sans dépose ou intervention sur le cadre, afin de modifier la géométrie interne des pleins et vides à la demande, sans aucune difficulté.

Le montage de la dalle peut donc s'effectuer facilement sur site en dessous des machines existantes.

Un certain nombre d'éléments fonctionnels mobiles 12 qui peuvent avoir des formes carrées, rectangulaires, ou autres, permettent de créer des remplissages dans les parties qui ne seront pas réservées à des traversées.

Ces éléments viendront s'encastrer entre le cadre et les traverses ou entre les traverses sur lesquelles ils reposent.

D'un épaisseur appropriée à leurs dimensions et à leur constitution, ils pourront, le cas échéant, comporter un épaulement 13 afin d'échapper à la forme des profilés, tant du cadre que des traverses.

La composition de ces éléments mobiles peut être de plusieurs types suivant les besoins et/ou les possibilités industrielles :
- composition identique à une dalle de faux plancher (aggloméré + revêtement de sol collé avec ou sans sous face métallique ;
- éléments fonctionnels pleins comportant ou non un revêtement identique au reste du faux plancher ;
- éléments fonctionnels composés de tronçons de profilé métallique de largeur appropriée et dont la longueur sera coupée à la demande.

Toute autre composition ou procédé répondant aux exigences techniques d'application sera envisageable.

Chaque élément qui compose la dalle pourra ainsi être fourni séparément, et pourra être doté d'un dispositif destiné à assurer un blocage de l'ensemble avec les éléments voisins.

La dalle est également susceptible, dans les mêmes conditions techniques, de supporter d'autres éléments fonctionnels intégrés ou non au cadre.

Ces éléments fonctionnels peuvent être, sans que la liste soit exhaustive :
- des grilles de ventilation/climatisation pouvant aller de la plus petite surface jusqu'à l'ouverture complète de la surface définie par le cadre, permettant ainsi un réglage fin des débits et direction de l'air sous et autour des machines (grilles de soufflage en angle ;
- des éléments transparents destinés à visionner le plénum du faux plancher, qui pourront être intégrés ou être des éléments fonctionnels de petites dimensions, et du fait de la souplesse d'implantation à l'intérieur du cadre, être placés exactement au-dessus de l'organe à visionner (détecteur, connexion, compteur, etc.) ;
- des boîtiers de prises de courant forts et/ou faibles, qui pourront également être des éléments autonomes ou être intégrés dans des éléments fonctionnels de dimensions appropriées, tout en respectant leurs impératifs techniques ;
- des boîtiers de raccordement de câbles de transmission de données ;
- tous autres éléments d'équipements spécifiques, tels que prises de fluides ou gazeux (laboratoires, hôpitaux) qui s'intégreront dans le système de la même façon que décrit ci-dessus ; et
- des dalles de faux plancher triangulaires reposant seulement sur trois vérins.

Chacun des éléments fonctionnels pourra également être fourni séparément, et pourra être doté d'un dispositif destiné à assurer un blocage mécanique de l'ensemble avec les éléments voisins.

En installant aux endroits nécessaires des dalles conformes à l'invention, on dispose des facilités suivantes:
- ouverture pour passage de câbles présentant des dimensions variables, y compris dans les angles, sans affaiblissement mécanique ;
- ouverture des mêmes dimensions variables pour pose de grilles de climatisation pouvant être placées exactement où il faut ;
- constitution des soufflages par petits éléments, permettant de régler finement les débits, sans avoir recours à des volets dont les réglages bougent et s'encrassent ;
- possibilité de poser des boîtiers amovibles de prises de courant, connecteurs, etc.) et toutes prises de fluides.

Toutes ces ouvertures et emplacements des accessoires peuvent être modifiés, déplacés, supprimés, rebouchés instantanément par remplacement de l'élément concerné par un autre.

On peut donc réutiliser indéfiniment tous les sous-ensembles du système, sans perte, et avec une variété de combinaisons sans obstacle.

Dans les locaux de petites dimensions, il devient possible de placer des récepteurs sur le faux plancher avec davantage de souplesse d'implantation, tout en gardant un accès au plénum sous le faux plancher.

La fabrication, le stockage, le transport, le montage deviennent simples et économiques.

Les dalles peuvent ne comporter qu'un seul type de profilé métallique standardisé commun pour le cadre et les traverses, complété par des accessoires modélisés universels : les angles fonctionnels et les têtes-supports de traverses.

Dans sa conception de base, répondant au minimum à sa destination première qui est le passage des fluides entre les surfaces supérieures et inférieures des faux planchers la dalle sera constituée :
- d'angles fonctionnels ;
- de profilé formant cadre ;
- d'un nombre approprié de traverses avec leurs têtes-supports ; et
- d'un nombre approprié d'éléments fonctionnels.

Le montage pourra être effectué aisément sur site avec un outillage réduit au strict minimum.

La modification de la composition et de l'implantation des éléments fonctionnels à l'intérieur du cadre est très facile. Alors que généralement il est difficile de soulever une dalle de faux plancher si l'on ne dispose pas de la ventouse adéquate (ou de griffe dans le cas d'un revêtement en moquette), les éléments du système sont facilement amovibles.

Dans le cas où tous les éléments fonctionnels seraient pleins et rempliraient la surface du cadre, au moins l'un d'eux pourra comporter un trou destiné à effectuer une prise facile et servira de "clé" pour la dépose des autres.

Par ailleurs, la modification de la géométrie interne du système sera également très aisée, le déplacement des traverses se faisant par glissement de celles-ci le long du cadre ou par leur dépose, repose par le dessus sans intervention sur le cadre.

Les dalles de l'invention deviennent donc un point d'accès privilégié ne nécessitant pas d'outil spécifique pour atteindre le plénum du faux plancher.

Les dalles de faux plancher triangulaires réduisent le temps passé aux réglages des vérins lors de la pose.

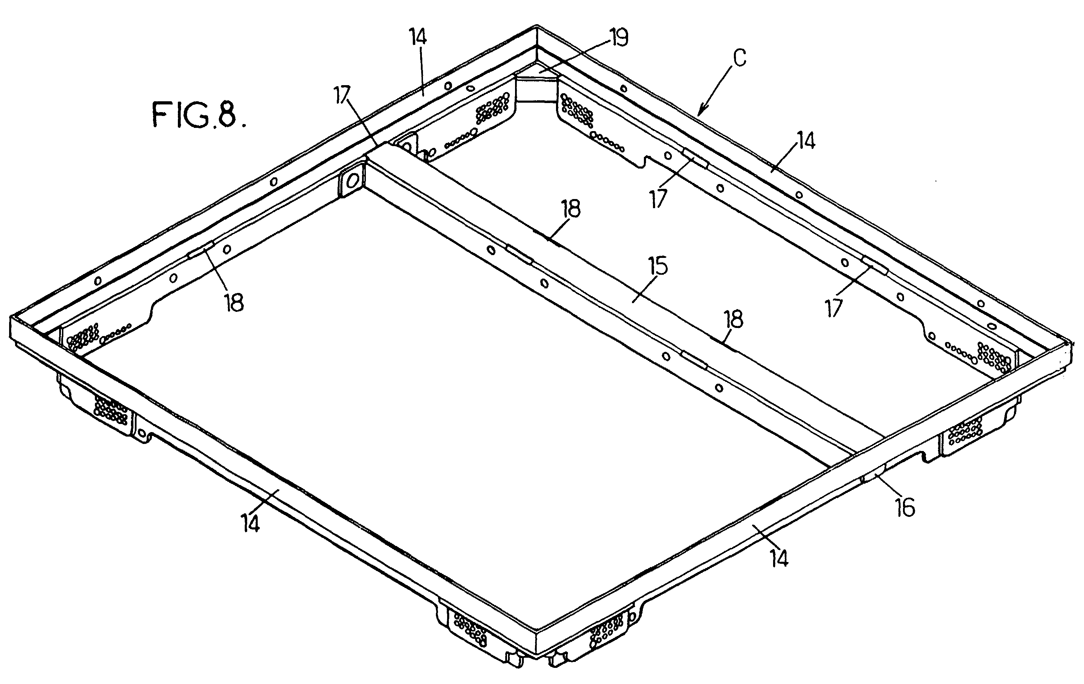

Dans le mode de réalisation de la figure 8, le cadre est carré et est constitué de profilés en tôle d'acier comportant des éléments de côté 14 reliés deux à deux par des angles fonctionnels 19 posés sur des vérins, ce cadre pouvant comporter en outre un certain nombre de traverses démontables telles que 15, de différentes longueurs, notamment des subdivisions de la longueur des côtés 14. Ainsi la traverse 15 peut relier deux côtés opposés 14 au 1/3 de leur longueur et être elle-même reliée transversalement, au niveau des tiers de sa longueur, aux deux autres côtés opposés 14 par deux autres traverses, l'une ayant 1/3 de la longueur d'un côté, l'autre les 2/3. La liaison peut s'effectuer par des pattes verticales 16 des extrémités des traverses, pattes engagées dans des fentes 17 des côtés ou des fentes 18 d'une autre traverse, selon la configuration modulaire adaptée. Une dalle modulaire peut ainsi être divisée au maximum en neuf sous-dalles carrées d'égales surfaces. On peut ainsi obtenir une dalle modulaire entièrement équipée, comportant par exemple un boîtier de sol, un regard, un boîtier de connectique et une grille de ventilation, ces éléments ayant comme surfaces des multiples du 1/9ème de la surface totale de la dalle.

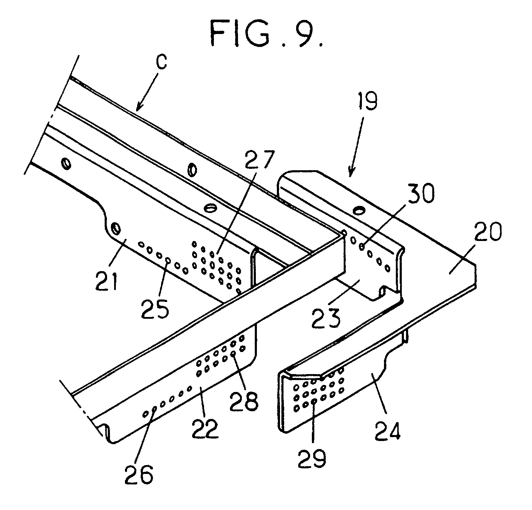

Les angles fonctionnels 19 (voir figure 9) sont pourvus d'un dispositif de réglage en hauteur du cadre C par rapport à la plaque de support 20 correspondante, portée par le vérin d'angle, le cadre C et cette plaque pouvant se déplacer verticalement l'un par rapport à l'autre avec un guidage par glissement d'ailes perforées verticales 21 et 22 du cadre C respectivement contre des ailes perforées 23 et 24 de la plaque 20. Les ailes 21 et 22 comportent chacune une rangée horizontale 25, 26 de six perforations ainsi que trois rangées horizontales de six perforations chacune, référencées respectivement 27 et 28 (la rangée supérieure des rangées 28 est masquée par le rebord du cadre).

Réciproquement, les ailes 23 et 24 de la plaque 20 comportent chacune trois rangées inclinées de six perforations chacune (29 pour l'aile 24 ; non visible pour l'aile 23) ainsi qu'une rangée inclinée de six perforations (30 pour l'aile 23 ; masquée par le rebord de la plaque 20 pour l'aile 24), l'agencement étant tel que, pour une hauteur relative donnée de la plaque 20 par rapport au cadre C, il existe :
- une perforation de la rangée horizontale 26 de l'aile 22 en coïncidence avec une perforation de la colonne correspondante des rangées inclinées 29 de l'aile 24 ;
- une perforation de la rangée inclinée non visible de l'aile 24 en coïncidence avec une perforation de la colonne correspondante des rangées horizontales 28 de l'aile 22 ;
- une perforation de la rangée inclinée 30 de l'aile 23 en coïncidence avec une perforation de la colonne correspondante des rangées horizontales 27 de l'aile 21 ; et
- une perforation de la rangée horizontale 25 de l'aile 21 en coïncidence avec une perforation de la colonne correspondante des rangées inclinées non visibles de l'aile 23, ces huit perforations en coïncidence deux à deux étant traversées par une cheville, un rivet ou une vis.

On obtient ainsi une assez grande latitude de réglage de la hauteur relative des plaques d'angle 20 par rapport au cadre proprement dit C, l'amplitude maximale de ce réglage étant égale à la différence de hauteur entre la perforation la plus basse de la rangée inférieure de trois rangées inclinées et la perforation la plus haute de la rangée supérieure de ces trois rangées.

Bien entendu, les combinaisons rangées horizontales/rangées inclinées, rangées simples/rangées multiples décrites avec référence à la figure 9 ne sont données qu'à titre d'exemple, de nombreuses variantes étant envisageables.

## Revendications

1. Dalle technique à éléments fonctionnels amovibles pour surfaces de faux plancher, destinée à s'intégrer en tant que partie constituante d'un ensemble autoéquilibré et rigide, **caractérisée en ce qu'**elle est constituée d'un cadre (1) de dimensions réglables et qui comporte d'une part des éléments profilés métalliques (2) de longueur appropriée s'emboîtant dans des pièces d'angle (3) par l'intermédiaire d'éclisses coulissantes (4), la longueur additionnée des éléments (2) et des pièces d'angle (3) correspondant à la plus petite dimension horizontale des dalles environnantes du faux plancher, et d'autre part au moins une traverse métallique (7) destinée à délimiter des espaces à l'intérieur dudit cadre, dont la hauteur correspond également à la plus faible épaisseur des dalles environnantes du faux plancher.

2. Dalle selon la revendication 1, **caractérisée en ce que** ses bords sont légèrement trapézoïdaux, pour lui permettre d'être placée et enlevée facilement.

3. Dalle selon la revendication 1 ou 2, **caractérisée en ce qu'**elle est posée sur des vérins métalliques de support reliés entre eux par un maillage de câbles raccordés à la ligne d'équipotentialité des masses d'utilisation, pour l'évacuation des charges électrostatiques.

4. Dalle selon l'une quelconque des revendications précédentes, **caractérisée en ce qu'**elle comporte un dispositif (5) de blocage des éclisses coulissantes (4) et un dispositif (6) de pièce d'angle permettant d'effectuer un réglage fin de la hauteur du cadre (1), pour le placer au niveau des dalles de faux plancher environnantes.

5. Dalle selon l'une quelconque des revendications précédentes, **caractérisée en ce que** la ou les traverses métalliques (7) sont constituées du même profilé que lesdits éléments (2).

6. Dalle selon l'une quelconque des revendications précédentes, **caractérisée en ce que** lesdites traverses (7) comportent à chaque extrémité une tête coulissante (9) reposant sur le profilé (2) du cadre, un dispositif de blocage (11) permettant de régler la longueur hors tout de ladite traverse (7) et de ladite tête (9) en fonction de la dimension du cadre (1).

7. Dalle selon l'une quelconque des revendications précédentes, **caractérisée en ce qu'**elle comporte des éléments fonctionnels mobiles (12) permettant de créer des remplissages dans les parties qui ne sont pas réservées à des traversées et s'encastrant entre cadre (1) et traverses (7), sur lesquels ils reposent.

8. Dalle selon l'une quelconque des revendications précédentes, comportant un dispositif de réglage de la hauteur du cadre (C) par rapport à une plaque de support, par exemple une plaque d'angle (20), le cadre et ladite plaque pouvant se déplacer verticalement l'un par rapport à l'autre avec glissement d'une aile perforée verticale (21 ; 22) dudit cadre contre une aile perforée verticale (23 ; 24) de ladite plaque (20), les perforations d'une desdites ailes (23; 24) étant disposées selon une ou plusieurs rangées (30; 29) superposées parallèles, inclinées par rapport à au moins une rangée de perforations (27 ; ; 26) de l'autre aile (21 ; 22), la hauteur relative du cadre (C) par rapport à la plaque de support (20) pouvant être ainsi réglée par blocage l'une sur l'autre, à l'aide d'une broche, vis, rivet ou analogue, d'une perforation de l'aile du cadre (21 ; 22) et de la perforation coïncidante de l'aile (23 ; 24) du support.

## Patentansprüche

1. Technische Platte mit entfernbaren Funktionselementen für Oberflächen von Zwischendecken, dazu bestimmt, sich als Bestandteil einer selbst-symmetrierenden und festen Anordnung zu integrieren, **dadurch gekennzeichnet, dass** die Platte aus einem Rahmen (1) mit verstellbaren Abmaßen besteht, der einerseits metallische Profilelemente (2) mit geeigneter Länge aufweist, die über Gleitschienen in Winkelstücke (3) eingepasst sind, wobei die Summe der Länge der Elemente (2) und der Winkelstücke (3) der kleinsten horizontalen Abmessung der umgebenden Platten der Zwischendecke entspricht, und andererseits zumindest eine metallische Traverse (7), die dazu bestimmt ist, die Räume im Inneren des Rahmens zu begrenzen und deren Höhe ebenfalls der geringsten Dicke der umgebenden Platten der Zwischendecke entspricht.

2. Platte nach Anspruch 1, **dadurch gekennzeichnet, dass** ihre Kanten leicht trapezoid ausgestaltet sind, damit sie leicht platziert und angehoben werden kann.

3. Platte nach Anspruch 1 oder 2, **dadurch gekennzeichnet, dass** sie auf metallischen Stützzylindern angeordnet ist, die untereinander über ein Netzwerk von Kabeln verbunden sind, die an der Äquipotentialleitung der Massen der Verwendung angeschlossen sind, um elektrostatische Ladungen abzuleiten.

4. Platte nach einem der vorangehenden Ansprüche, **dadurch gekennzeichnet, dass** sie eine Blockiervorrichtung (5) für die Gleitschienen (4) und eine Winkelstückeinrichtung (6) aufweist, die eine Feinregelung der Höhe des Rahmens (1) ermöglicht, um ihn auf der Höhe der umgebenden Platten der Zwischendecke anzuordnen.

5. Platte nach einem der vorhergehenden Ansprüche, **dadurch gekennzeichnet, dass** die zumindest eine metallische Traverse (7) das gleiche Profil hat wie die Elemente (2).

6. Platte nach einem der vorangehenden Ansprüche, **dadurch gekennzeichnet, dass** die Traversen (7) an jedem Ende einen Gleitkopf (9) haben, der auf dem Profil (2) des Rahmens ruht, wobei eine Blockiervorrichtung (11) die Regelung der Länge außerhalb der Traverse (7) und des Kopfes (9) als Funktion der Dimension des Rahmens (1) ermöglicht.

7. Platte nach eine der vorangehenden Ansprüche, **dadurch gekennzeichnet, dass** sie bewegliche Funktionselemente (12) aufweist, die es ermöglichen, Stauräume in den Bereichen zu bilden, die nicht für Durchquerungen reserviert sind, und die sich zwischen Rahmen (1) und Traversen (7) einlassen, auf welchen sie ruhen.

8. Platte nach einem der vorangehenden Ansprüche, mit einer Vorrichtung zur Regelung der Höhe des Rahmens (C) bezüglich einer Stütztafel, beispielsweise einer Winkeltafel (20), wobei der Rahmen und diese Tafel sich vertikal bezüglich einander durch das Gleiten eines vertikalen perforierten Flügels (21, 22) des Rahmens gegen einen perforierten vertikalen Flügel (23, 24) der Tafel (20) verschieben können, wobei die Perforationen eines dieser Flügel (23, 24) in einer oder mehreren parallel überlagerten Reihen (30, 29) angeordnet sind, geneigt bezüglich zumindest einer Reihe von Perforationen (27, 26) des anderen Flügels (21, 22), und wobei die relative Höhe des Rahmens (C) bezüglich der Stütztafel (20) so durch Blockage einer Perforation des Flügels des Rahmens (21, 22) bezüglich der entsprechenden Perforation des Flügels (23, 24) der Stützplatte mit Hilfe eines Dorns, einer Schraube, eines Niets oder ähnlichem geregelt werden kann.

## Claims

1. Cavity floor panel with removable functional elements for areas of false flooring, intended to form a constituent part of a self-stabilized and rigid assembly, **characterized in that** it is formed of a frame (1) of adjustable dimensions and which has on the one hand, metal section pieces (2) of an appropriate length fitting into corner pieces (3) by means of sliding fishplates (4), the total length of the elements (2) and corner pieces (3) corresponding to the shortest horizontal dimension of the surrounding floor panels of the false flooring, and, on the other hand, at least one metal crossmember (7) intended to delimit spaces within the said frame, whose height also corresponds to the smallest thickness of the surrounding floor panels of the false flooring.

2. Floor panel according to Claim 1, **characterized in that** its edges are slightly trapezoidal, to allow it to be fitted and removed easily.

3. Floor panel according to Claim 1 or 2, **characterized in that** it is placed on metal support jacks which are joined together by a network of cables connected to the ground bonding line for removing electrostatic charge.

4. Floor panel according to any one of the preceding claims, **characterized in that** it has a device (5) for locking the sliding fishplates (4) and a corner piece device (6) to allow fine adjustment of the height of the frame (1) to bring it even with the surrounding floor panels of the false flooring.

5. Floor panel according to any one of the preceding claims, **characterized in that** the metal crossmember or crossmembers (7) are made of the same type of section piece as the said pieces (2).

6. Floor panel according to any one of the preceding claims, **characterized in that** the said crossmembers (7) have at each end a sliding head (9) that rests on the section piece (2) of the frame, a locking device (11) allowing the overall length of the said crossmember (7) and the said head (9) to be adjusted to suit the size of the frame (1).

7. Floor panel according to any one of the preceding claims, **characterized in that** it has movable functional elements (12) which fill in those parts which are not reserved for the passage of services and which fit between the frame (1) and the crossmembers (7), on which they rest.

8. Floor panel according to any one of the preceding claims, comprising a device for adjusting the height of the frame (C) relative to a support plate, for example a corner plate (20), it being possible for the frame and the said plate to move vertically one relative to the other, with a vertical perforated flange (21; 22) of the said frame sliding against a vertical perforated flange (23; 24) of the said plate (20), the perforations in one of the said flanges (23; 24) being arranged in one or more superimposed parallel rows (30; 29) which are inclined relative to at least one row of perforations (27; 26) of the other flange (21; 22), it thus being possible for the relative height of the frame (C) relative to the support plate (20) to be set by locking together, using a pin, screw, rivet or the like, a perforation of the flange of the frame (21; 22) and the coinciding perforation of the flange (23; 24) of the support.
